# EUROPEAN PATENT APPLICATION

(11) **EP 0 522 220 A1**
(43) Date of publication of application: **13.01.1993**
(21) Application number: 91500074.9
(22) Date of filing: 09.07.1991
(51) Int. Cl.: A23N 17/00

(54) **A machine for cooling animal fodder and similar material**

(71) Applicant: CONSERGRA, S.A., E-08250 Sant Joan de Vilatorrada (Barcelona) (ES)
(72) Inventor: Rius Rios, Juan, E-08240 Manresa (ES); Rius Torres, Juan, E-08240 Manresa (ES)
(74) Representative: Duran Moya, Luis-Alfonso

(57) **Abstract**

A machine for cooling animal fodder and similar materials of the type that comprises a pelletizing machine which takes the products from feeder hoppers (1,2) and passes the pelletized material to a receptacle (8) which cools the pellets, characterized in that it takes the form of a unit (9) supplying refrigerated air at a controlled humidity level to the receptacle (8) containing the pellets discharged from the pelletizer, the cooled and controlled air being supplied at a low pressure and low velocity and being extracted following its passage in contra-flow against the pelletized material directly to the exterior by an extraction system (15) and without a requirement for a recovery operation of fines.

## Description

This invention patent refers to a machine for carrying out a rapid cooling of pelletized organic products and particularly animal fodder and similar materials.

The machine which is the object of this patent is designed to provide the cooling operation immediately following the pressing operation of the pellets.

Developments in recent years in the raising and breeding of livestock have been spectacular, such changes having affected the rearing system, fattening times, feeding, etc. and having been the subject of constant investigation always with the objective of improved economy and improved quality.

Specifically in the field of feeding, programmes have been formulized giving the ideal for each species of of livestock with the best balance of diet possible.

Such formulae comprise various components, such as cereals, fish flour, fats, vitamins, minerals, mollasses and other products and these are offered in granulated or pelletized form, the pellets being small balls or cylinders of the paste containing the above items, pressed under heat.

Requirements for a continual improvement in the efficiency in the manufacture of livestock feedstuffs in existing plants, as well as the policies of volume production at the present moment, together with the desirability of minimizing stocks call for new plants being built to be operated at the greatest possible efficiency with the lowest initial cost and minimum maintenance.

The shape of the material after pelletizing can vary according to the mould used for pressing and while it ejects from the mould as a pellet the process is not yet complete in that it leaves very hot, in the region of some 80 degrees C. and with a high humidity, 16% to 17% but depending on the composition and the manufacturing process.

This invention has as object the modification of the state of the pellet as it leaves the press so that it is cooled rapidly, the cooling process not then presenting a bottle neck in the production line and at the same time reducing the humidity level of the pellet and consequently avoiding the early deterioration of the product which would give it a diminished shelf life in storage prior to its sale.

Installations currently exist which carry out the cooling of the pellets using air at ambient temperature flowing against the outflow of the products at a high volume and high velocity as they eject from the pressing operation. This gives a slow cooling effect as well as requiring the handling of large volumes of air and high powered impulsion systems. In addition due to the high velocity of the air stream an excessive amount of fines is produced, separated from the pellets and requiring a subsequent recovery process so as to avoid a loss of the material. All this raises the cost of the feedstuff processing and is a cause of wastage

To obviate these objectionable characteristics this invention patent discloses a machine or installation for the cooling of the pellets and having the capability of a rapid cooling process with lower air volumes, less impulsion energy in the various component operations of the machine and and avoidance of the separation of fines from the formed pellets and hence elliminating the necessity for a recovery operation for the fines.

Essentially the machine, object of this patent comprises as an integrated unit, a granulating press which takes the product to be pelletized from overhead hoppers and then after pressing passes it to a heat exchanger where there in an interaction between the pellets proceeding from the granulator and cooling air at a controlled humidity coming from a refrigeration unit section of the machine. For preference the flow of cooling air should be against the direction of flow of the pellets, then passing to an exhaust system evacuating to the exterior. The leaving temperature of the air is much higher, depending both on its temperature at entry and the temperature of the pellets. The air leaves also with a high moisture content due to the humidity extracted from the pressed pellets. Obviously the various parameters such as the product flow, the air flow, and other characteristics can be varied so as to yield the required cooling effect and humidity level in the final pelletized product.

For a better understanding of the invention the attached schematic drawing shows an embodiment of this patent.

In the said drawing can be seen the arrangement of the feed hoppers -1- and -2-, the number being a variable, the mouths of which -3- and -4- feed the entry bin -5- of the pelletizer which in turn, feeds into the heat exchange unit -8- through ducting -7-, the speed and flow to this unit being at a pre-determined rate.

The refrigeration unit -9- takes air from the exterior and delivers it, after cooling and drying it, to the heat exchanger -8- through the ducting -10-, thus causing within the heat exchanger -8- a contra-flow as the entry -11- into the unit -8- is at a lower level than the outlet -12- of the unit, the air flow being consequently in full contra-flow to that of the pellets.

A pipework -13- connects the outlet -12- to an extraction system -15- which discharges through the exit mouth to the atmosphere.

The refrigeration unit -9- is designed specifically to cope with high temperature and humid conditions as well as high dust quantities in suspension in the ambient environment. It operates on a compression, condensation, expansion, evaporation system using R-22, a halogen hydrocarbon much promoted at the moment due its non nocive effect on the ozone layer and on individuals as compared to other currently used fluids of this type.

The refrigeration unit will generally be of a unit type incorporated in the overall installation. In cases where, therefore, the ambient air circulating in the condenser cannot be adequately evacuated and could be susceptible to re-absorption by the fans, with the discharge pressure being in unsuitable areas, the condenser can be located in a better ventilated position, the group of units then being unitized as separate components.

The refrigeration unit comprises a cooling compressor, a forced air condenser, a liquid receiver, a thermostatic expansion valve, and a forced air evaporator as well as the auxiliary elements such as desecant filters, by-pass valves in the vessels and other zones of the circuits, non-return valves. level gauges, etc. Also included are controls for automatic operation, safety controls such as pressostats, thermostats, safety valves, etc.

All that does not alter change or modify the essence of the machine as described will be a variable for the purposes of this invention patent.

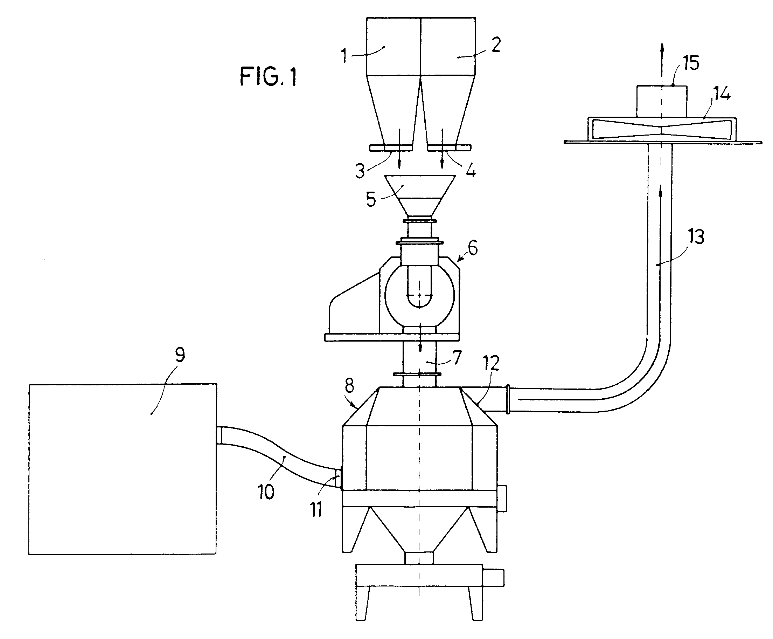

## Claims

1. A machine for cooling animal fodder and similar materials of the type that comprises a pelletizing machine which takes the products from feeder hoppers and passes the pelletized material to a receptacle which cools the pellets, characterized in that it takes the form of a unit supplying refrigerated air at a controlled humidity level to the receptacle containing the pellets discharged from the pelletizer, the cooled and controlled air being supplied at a low pressure and low velocity and being extracted following its passage in contra-flow against the pelletized material directly to the exterior by an extraction system and without a requirement for a recovery operation of fines.
